# EUROPÄISCHE PATENTANMELDUNG

(11) **EP 1 315 354 A1**
(43) Veröffentlichungstag der Anmeldung: **28.05.2003**
(21) Anmeldenummer: 02001520.2
(22) Anmeldetag: 22.01.2002
(51) Int. Cl.: H04L 29/06

(54) **Verfahren zur übertragung und Abspielen von Mediadaten für Wiedergabe**

(30) Priorität: 23.11.2001 DE 10157571
(71) Anmelder: Evsan, Ibrahim, 50374 Erftstadt (DE)
(72) Erfinder: Evsan, Ibrahim, 50374 Erftstadt (DE)
(74) Vertreter: Dendorfer, Claus, Dr.

(57) **Zusammenfassung**

Ein Verfahren zum Übertragen und Abspielen von Mediadaten (M) weist die von einem Client (16) zumindest teilweise parallel ausgeführten Schritte auf, die in Teilstücke (X1, X2, X3, ... XN) unterteilten Mediadaten (M) sukzessive auf den Client (16) herunterzuladen und die heruntergeladenen Teilstücke (X1, X2, X3, ... XN) durch den Client (16) multimedial abzuspielen, wobei das Abspielen frühestens beginnt, nachdem das erste Teilstück (X1, X2, X3, ... XN) vollständig heruntergeladen wurde, und wobei die Teilstücke (X1, X2, X3, ... XN) beim Abspielen zusammenhängend wiedergegeben werden. Ein Client (16), ein Verfahren zum Bereitstellen von Mediadaten (M) und ein Server (12, 14, 14', 14", ...) weisen entsprechende Merkmale auf. Durch die Erfindung sollen Probleme vermieden werden, die bei bekannten "Streaming"-Verfahren auftreten.

## Beschreibung

Die Erfindung betrifft Techniken zum Übertragen und multimedialen Abspielen von Mediadaten.

Bei Verfahren, die unter der Bezeichnung "Streaming" bekannt sind, werden die Mediadaten in einem Datenstrom über ein Kommunikationsmedium (z.B. das Internet) übertragen. Diese Verfahren sind jedoch aufwendig, weil in ihnen die Möglichkeit einer gestörten Kommunikation berücksichtigt werden muß. Es müssen Vorkehrungen getroffen werden, um nach einem Abreißen des Datenstroms die Kommunikation wiederaufnehmen zu können.

Die Erfindung hat die Aufgabe, diese Probleme zu vermeiden. Vorzugsweise soll durch die Erfindung ferner ein guter Schutz gegen unzulässiges Kopieren und/oder Wiedergeben der Mediadaten erzielt werden.

Die Erfindung ist durch die unabhängigen Ansprüche definiert. Die abhängigen Ansprüche betreffen bevorzugte Ausgestaltungen der Erfindung. Die Aufzählungsreihenfolge der Schritte in den Verfahrensansprüchen soll nicht als Einschränkung des Schutzbereichs aufgefaßt werden. Vielmehr sind Ausgestaltungen der Erfindung vorgesehen, bei denen diese Schritte in anderer Reihenfolge und/oder ganz oder teilweise parallel und/oder ganz oder teilweise ineinander verzahnt (*interleaved*) ausgeführt werden.

Die Erfindung geht von der Grundidee aus, zu übertragende Mediadateien in Teilstücke zu unterteilen. Diese Teilstücke werden an einen Client übertragen und dort abgespielt. Die Übertragung jedes Teilstücks erfolgt wie ein gewöhnlicher Datei-Download. Spezielle Streaming-Technologien sind nicht erforderlich. Dies vereinfacht das erfindungsgemäße Verfahren erheblich, weil übliche und weit verbreitete Protokolle eingesetzt werden können.

In bevorzugten Ausgestaltungen der Erfindung liegen die Teilstücke in verschlüsselter Form vor und werden erst beim Abspielen entschlüsselt. Vor der Entschlüsselung der Teilstücke kann auch erst die Abspielberechtigung durch eine Serverabfrage überprüft werden. Vorzugsweise werden die übertragenen Teilstücke als normale Dateien in einem üblichen Dateisystem des Client gespeichert. Ferner kann vorgesehen sein, die Teilstücke nach Ablauf eines vorbestimmten Zeitraums automatisch aus dem Dateisystem zu löschen.

In bevorzugten Ausführungsformen werden Verwaltungs- und Sonderinformationen, die sich am Ende der ursprünglichen Mediadaten befinden, extrahiert und zeitlich zumindest in der ersten Hälfte der gesamten Übertragung der Teilstücke (vorzugsweise schon früher, z.B. innerhalb der ersten 20 % der Gesamtübertragung oder sogar schon im ersten Teilstück oder vor dem ersten Teilstück) übertragen. Ferner kann eine Partlist erstellt und übertragen werden, die Informationen über die einzelnen Teilstücke (z.B. deren Dateinamen) enthält. Die Dateinamen sind insbesondere dann erforderlich, wenn die Übertragung der Teilstücke als normaler Datei-Download erfolgen soll.

Der erfindungsgemäße Client, das erfindungsgemäße Verfahren zum Bereitstellen von Mediadaten und der erfindungsgemäße Server sind bevorzugt mit Merkmalen weitergebildet, die den oben beschriebenen und/oder in den abhängigen Ansprüchen genannten Merkmalen entsprechen.

Weitere Merkmale, Aufgaben und Vorteile der Erfindung gehen aus der folgenden Beschreibung eines Ausführungsbeispiels und mehrerer Ausführungsalternativen hervor. Es wird auf die schematischen Zeichnungen verwiesen, in denen zeigen:
Fig. 1 eine Überblicksdarstellung der bei einem Ausführungsbeispiel der Erfindung vorgesehenen Komponenten und Kommunikationspfade,
Fig. 2 eine Darstellung der im Verarbeitungsrechner und dem Mastersever während einer Folge von Verarbeitungsschritten in dem Ausführungsbeispiel von Fig. 1 vorliegenden Daten,
Fig. 3 ein beispielhaftes Ablaufdiagramm der Datenübertragung zwischen einem Cache-Server und dem Client in dem Ausführungsbeispiel von Fig. 1, und
Fig. 4 ein beispielhaftes Ablaufdiagramm von mit dem Abspielvorgang zusammenhängenden Schritten in dem Ausführungsbeispiel von Fig. 1.

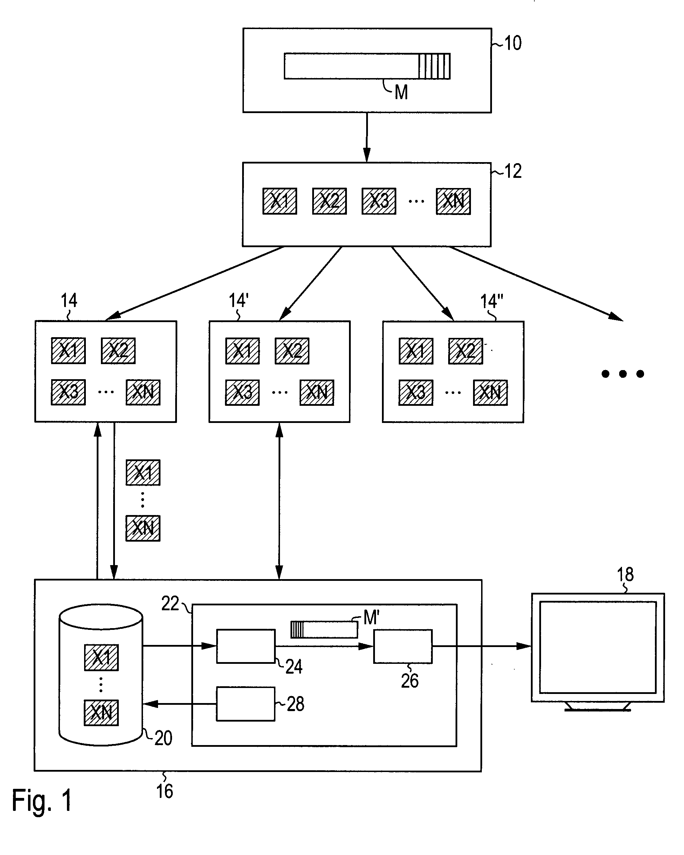

In dem in Fig. 1 gezeigten Gesamtsystem ist ein Verarbeitungsrechner 10 vorgesehen, der Zugriff auf Mediadaten M hat. Die Mediadaten M sind beispielsweise Videofilme oder Sounddaten oder Videofilme mit zusätzlichen, vom Filminhalt unabhängigen Soundkomponenten, die in einem an sich bekannten Format (z.B. einem der Formate avi, mpg, mp3, ...) vorliegen. In Fig. 1 ist beispielhaft nur ein Satz von Mediadaten M dargestellt, während in der praktischen Implementierung des Systems viele weitere Mediadatensätze (entsprechend dem Inhalt eines ganzen Film- oder Audioarchivs) vorliegen.

Der Verarbeitungsrechner 10 setzt die Mediadaten M in einzelne, verschlüsselte Teilstücke X1, X2, ..., XN um, die auf einen oder mehrere Server übertragen werden (*upload*). Im vorliegenden Ausführungsbeispiel ist ein Masterserver 12 vorgesehen, der die N Teilstücke X1, X2, ..., XN von dem Verarbeitungsrechner 10 erhält und sie seinerseits an mehrere Cache-Server 14, 14', 14", ... weiterleitet. In Ausführungsalternativen wird eine andere Serverkonfiguration eingesetzt. Wesentlich ist nur, daß die N verschlüsselten Teilstücke X1, X2, ..., XN zum Herunterladen (*download*) mit ausreichender Bandbreite zur Verfügung stehen.

Ein Client 16 ist als an sich bekannter Heim-Computer, beispielsweise als PC oder Macintosh®, ausgebildet. Der Client 16 ist dazu eingerichtet, die Teilstücke X1, X2, ..., XN sukzessive über ein Kommunikationsnetz (z.B. das Internet) von einem oder mehreren der Cache-Server 14, 14', 14", ... herunterzuladen und die Mediadaten M über einen angeschlossenen Bildschirm 18 mit Lautsprechern (in Fig. 1 nicht gesondert gezeigt) wiederzugeben. Dazu weist der Client 16 ein an sich bekanntes Betriebssystem (z.B. Microsoft® Windows® oder Apple® MacOS®) auf, das unter anderem ein Dateisystem 20 zum Speichern der Teilstücke X1, X2, ..., XN und anderer Dateien bereitstellt. Die Teilstücke X1, X2, ..., XN werden im Dateisystem als normale Dateien abgelegt.

Der Client 16 führt ein Abspielprogramm 22 aus, das einen Filter 24, einen Decoder 26 und ein Löschmodul 28 aufweist. Der Filter 24 dient dazu, während des Abspielens die verschlüsselten Teilstücke X1, X2, ..., XN vom Dateisystem 20 zu laden, sie zu entschlüsseln und zu einer abspielbaren Fassung M' der Mediadaten M zusammenzusetzen. Der Decoder 26 wandelt die abspielbare Fassung M' auf an sich bekannte Weise in eine Bildsequenz und einen oder mehrere Tonkanäle um, die über den Bildschirm 18 bzw. die Lautsprecher ausgegeben werden.

Bei dem gesamten Übertragungsvorgang findet keine Qualitätsminderung statt; das multimediale Abspielen der entschlüsselten und wieder zusammengesetzten Teilstücke X1, X2, ..., XN unterscheidet sich nicht von einem Abspielen der ursprünglichen Mediadaten M. Um ein unbefugtes Kopieren zu verhindern, werden die verschlüsselten Teilstücke X1, X2, ..., XN erst beim Abspielen entschlüsselt und zusammengesetzt. Vor dem Abspielen wird durch eine Anfrage bei einem Server (im vorliegenden Beispielablauf dem Cache-Server 14') die Berechtigung des Clients 16 zum Abspielen überprüft.

Der Decoder 26 ist an das abspielbare Datenformat M' der Mediadaten M angepaßt. Wenn beispielsweise die Mediadaten M im avi-Format vorliegen, dann kann ein Decoder 26 ähnlich dem in dem Windows® Media player™ eingesetzten Decoder verwendet werden, der jedoch die Änderungen der abspielbaren Fassung M' gegenüber den ursprünglichen Mediadaten M berücksichtigt. Im vorliegenden Ausführungsbeispiel unterscheidet sich die abspielbare Fassung M' von den ursprünglichen Mediadaten M lediglich dadurch, daß einige zum Abspielen erforderliche Verwaltungsinformationen (in Fig. 1 durch eine senkrechte Schraffur angedeutet) von ihrer ursprünglichen Position am Ende der Mediadaten M an den Anfang der abspielbaren Fassung M' gerückt sind. Die inhaltstragenden Teile der Formate M und M' sind identisch.

Der Abspielvorgang und das Herunterladen der Teilstücke X1, X2, ..., XN erfolgt vorzugsweise zumindest teilweise parallel; im hier beschriebenen Ausführungsbeispiel ist vorgesehen, daß das Abspielen erst nach dem vollständigen Erhalt des ersten Teilstücks N1 beginnt. In Ausführungsalternativen können - gegebenenfalls abhängig von der Übertragungsgeschwindigkeit zwischen dem Cache-Server 14, 14', 14", ... und dem Client 16 - vor dem Abspielbeginn zwei oder mehr Teilstücke X1, X2, ..., XN in den Client 16 geladen werden, um einen ausreichenden Datenbestand zur Pufferung von Übertragungsstockungen bereitzustellen.

Das Löschmodul 28 ist dazu eingerichtet, nach Ablauf einer vorbestimmten Zeitdauer (im vorliegenden Ausführungsbeispiel 24 Stunden) die im Dateisystem 20 des Clients 16 gespeicherten Teilstücke X1, X2, ..., XN zu löschen.

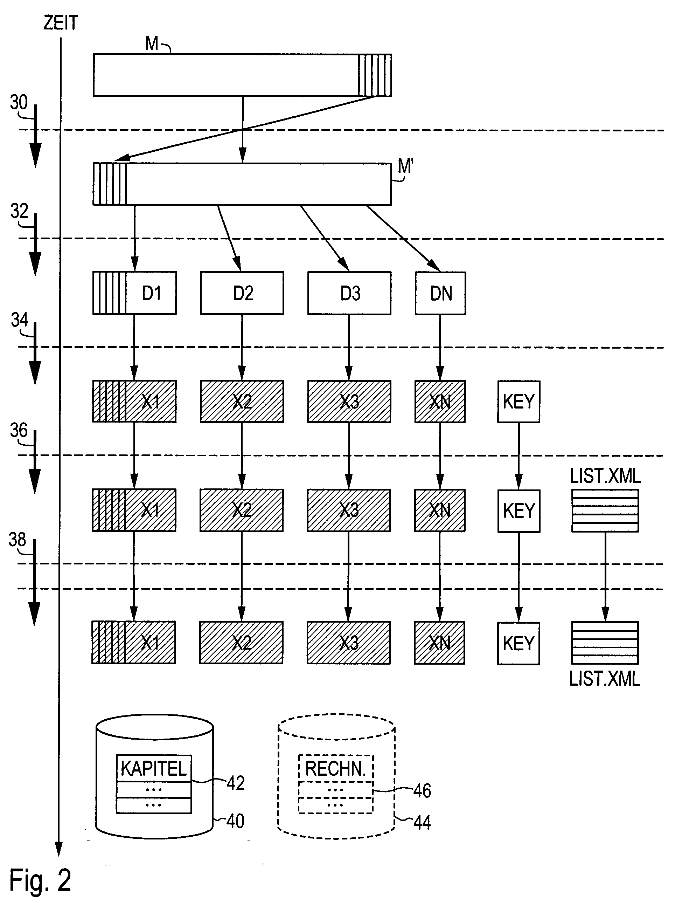

Fig. 2 veranschaulicht in den ersten fünf Zeilen die durch den Verarbeitungsrechner 10 vorgenommenen Schritte der Aufteilung und Verschlüsselung der Mediadaten M, um die N verschlüsselten Teilstücke X1, X2, ..., XN und weitere Hilfsinformationen zu erhalten.

In einem ersten Schritt 30 werden bestimmte Verwaltungs- und Sonderinformationen, die sich am Ende der ursprünglichen Mediadaten M befinden, extrahiert und separat gespeichert. Die Datenfolge M', die mit den extrahierten Informationen beginnt und dann die eigentlichen Bild- und Toninhalte der Mediadaten M enthält, wird in einem nächsten Schritt 32 in N Teilstücke D1, D2, D3, ..., DN zerteilt, wobei alle Teilstücke bis auf das letzte die gleiche Größe haben. Das erste Teilstück D1 beginnt mit den extrahierten Verwaltungs- und Sonderinformationen, die in Fig. 2 durch eine senkrechte Schraffur dargestellt sind. Diese Umordnung ist erforderlich, weil die Verwaltungs- und Sonderinformationen zu Beginn des Abspielvorgangs benötigt werden und somit bei einer Übertragung der Mediadaten M in der ursprünglichen Reihenfolge das Abspielen erst nach Erhalt aller Teilstücke möglich wäre.

In Schritt 34 werden die N Teilstücke D1, D2, D3, ..., DN gemäß einem an sich bekannten Algorithmus und einem neu erzeugten und nur für diesen Vorgang verwendeten Einmal-Schlüssel KEY verschlüsselt, um die N verschlüsselten Teilstücke X1, X2, X3, ..., XN zu erhalten (die Verschlüsselung ist in Fig. 2 durch eine schräge Schraffur angedeutet). Der Schlüssel KEY ist zur späteren Wiedergabe der Mediadaten erforderlich. Der Schlüssel KEY wird daher gespeichert, um zunächst an-die Server 12, 14, 14', 14", ... und letztendlich (nach erfolgreicher Autentifizierung) an den Client 16 weitergegeben zu werden.

In einem folgenden Schritt 36 erstellt der Verarbeitungsrechner 10 eine genaue Partlist im XML-Format ("LIST.XML"). Die Partlist wird zur Steuerung der späteren Datenübertragung vom Masterserver 12 zum Cache-Server 14, 14', 14", ... und weiter zum Client 16 sowie zur Fehlerkontrolle verwendet. Neben Anzahl, Größe und Name der einzelnen Teilstücke X1, X2, X3, ..., XN enthält die Partlist für jedes Teilstück X1, X2, X3, ..., XN eine CRC-Prüfsumme, durch die sich eindeutig verifizieren läßt, ob die jeweilige Datei seit ihrer Erstellung verändert wurde oder nicht. Sind einzelne Teilstücke X1, X2, X3, ..., XN defekt, so können diese nachgeladen oder gegebenenfalls die unbeschädigten Teilstücke X1, X2, X3, ..., XN zu einer Datenrekonstruktion genutzt werden.

Die als Ergebnis von Schritt 36 im Verarbeitungsrechner 10 vorliegenden Teilstücke X1, X2, X3, ..., XN und weiteren Daten (Schlüssel KEY und Partlist LIST.XML) werden in Schritt 38 zunächst auf den Masterserver 12 und dann auf die Cache-Server 14, 14', 14", ... übertragen (*upload*). Der *Upload*-Vorgang erfolgt zunächst per *ftp* (*file transfer protocol*) an den Masterserver 12. Der Masterserver 12 steuert dann die weitere Verteilung an die Cache-Server 14, 14', 14", ... mittels automatisierter, zu regelmäßigen Zeitpunkten angestoßener Abläufe (*cronjobs*). Nach jedem kompletten *upload* führt der jeweilige Empfänger (Masterserver 12 und Cache-Server 14, 14', 14", ...) anhand der in der Partlist übermittelten Daten eine Konsistenzprüfung der hochgeladenen Dateien durch. Falls ein Fehler entdeckt wird, wird dieser unverzüglich an den Administrator gemeldet.

Ist der Hochlade-Vorgang korrekt abgeschlossen, wird in einer Verwaltungsdatenbank 40 ein Verwaltungsdatensatz 42 für die übermittelten Mediadaten angelegt. Neben den oben aufgeführten Dateiinformationen der Partlist enthält der Verwaltungsdatensatz 42 für die Abrechnung *(billing)* relevante Informationen wie Spiellänge und IDs der für diesen Mediaeintrag zuständigen Digitalisierungstechniker. Ferner werden Kapitelinformationen eingetragen, welche ähnlich den DVD-Kapiteln dem Benutzer eine einfache Navigation ermöglichen. In einigen Ausgestaltungen weist der Verwaltungsdatensatz 42 überdies Contentdaten auf, wie etwa Namen von Autoren oder Bilder zu dem Mediaeintrag. In Ausführungsalternativen ist vorgesehen, die in Schritt 30 extrahierten Verwaltungs- und Sonderinformationen nicht verschlüsselt im ersten Teilstück X1 zu übertragen, sondern unverschlüsselt als gesonderte Datei. In diesem Fall können auch diese Informationen in den Verwaltungsdatensatz 42 aufgenommen werden.

Nachdem die Eintragungen in der Verwaltungsdatenbank 40 abgeschlossen sind, wird noch eine erweiterte Validitätsprüfung der übermittelten Daten vorgenommen. Die Daten werden neben ihrer Vollständigkeit auch auf Schlüssigkeit geprüft. Wird kein Fehler gefunden, so wird der Verwaltungsdatensatz 42 aktiviert und ist somit für den Client 16 abrufbar. In unterschiedlichen Ausführungsformen der Erfindung wird die Verwaltungsdatenbank 40 zentral durch den Masterserver 12 oder verteilt durch die Cache-Server 14, 14', 14", ... oder durch weitere, in Fig. 1 nicht gezeigte Rechner verwaltet. Neben der Verwaltungsdatenbank 40 ist eine Abrechnungsdatenbank 44 vorgesehen, in der während der Abspielens ein Abrechnungsdatensatz 46 angelegt und gepflegt wird. Die Abrechnungsdatenbank 44 ist in Fig. 2 gestrichelt dargestellt, weil sie an den Schritten 30 - 38, die der eigentliche Gegenstand von Fig. 2 sind, nicht beteiligt ist.

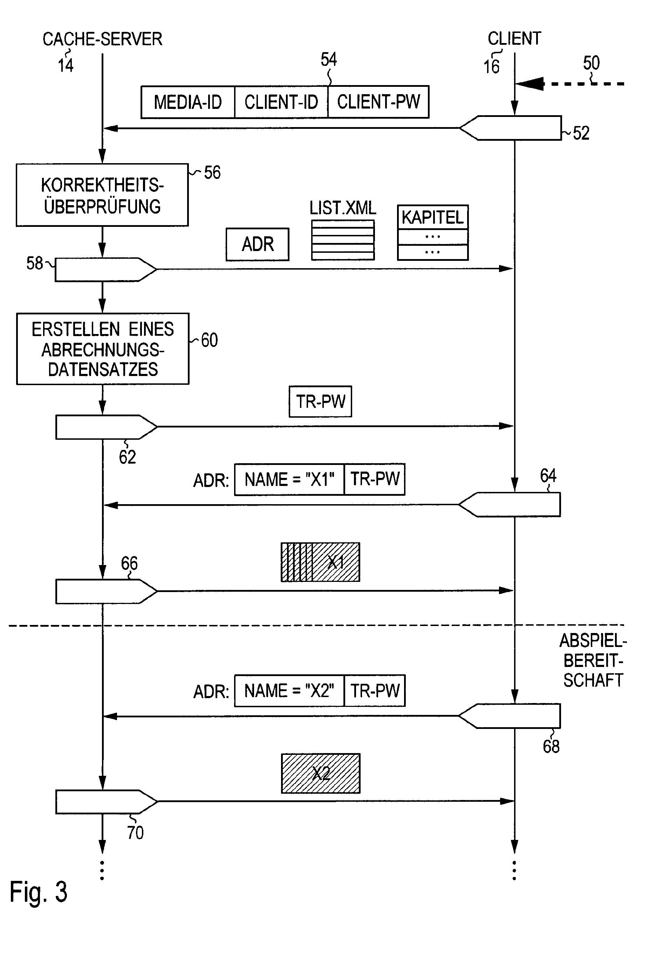

Fig. 3 zeigt an einem Beispielablauf das sukzessive Herunterladen *(download)* der N verschlüsselten Teilstücke X1, X2, X3, ..., XN und weiterer Daten auf den Client 16. Dieses Herunterladen wird durch eine Benutzeraktion 50 gestartet, beispielsweise einen Mausklick auf ein Bedienfeld einer auf dem Bildschirm 18 angezeigten Benutzeroberfläche. Im vorliegenden Ausführungsbeispiel wird die Benutzeroberfläche durch einen an sich bekannten Internet-Browser (z.B. Microsoft® Explorer® oder Netscape® Navigator®) dargestellt, der mit einem Flash®-Plugin ausgestattet ist. In Ausführungsalternativen sind dagegen Funktionen zum Anzeigen der Benutzeroberfläche in das vom Client 16 ausgeführte Abspielprogramm 22 integriert.

Jedem zum Laden eines Medienangebots zugeordneten Bedienfeld der Benutzeroberfläche ist ein eindeutiger Bezeichner MEDIA-ID des Medienangebots zugeordnet. Wenn der Benutzer durch die Aktion 50 das Medienangebot anfordert, sendet der Client 16 in Schritt 52 eine Anfrage 54 an den Cache-Server 14 (oder einen anderen, funktionsgleichen Cache-Server 14', 14", ...). Im hier beschriebenen Ausführungsbeispiel ist die Anfrage 54 eine GET-Anfrage gemäß der HTTP-1.1-Norm. Die Anfrage 54 enthält neben dem eindeutigen Bezeichner MEDIA-ID des gewünschten Medienangebots auch einen Clientbezeichner CLIENT-ID des Client 16 sowie zum Berechtigungsnachweis des Client 16 ein entsprechendes Clientkennwort CLIENT-PW.

In Schritt 56 prüft der Cache-Server 14 (oder in Ausführungsalternativen ein anderer mit dieser Aufgabe betrauter Server) den Clientbezeichner CLIENT-ID auf Zulässigkeit und das Clientkennwort CLIENT-PW auf Korrektheit. Fehlgeschlagene Anmeldungsversuche werden in lediglich den Systemadminstratoren zugänglichen Dateien vermerkt *(logging).* Bei einer erfolgreichen Anmeldung werden in Schritt 58 eine Serveradresse ADR, die Partlist und die im Verwaltungsdatensatz 42 eingetragenen Kapitelinformationen an den Client 16 übertragen. Die Serveradresse ADR bezeichnet denjenigen Server (in der Regel einen der Cache-Server 14, 14', 14", ...), an dem der Client 16 die einzelnen Teilstücke X1, X2, X3, ..., XN abrufen kann. Die Kapitelinformationen dienen dem Benutzer zu Navigationszwecken.

Im Anschluß an die Korrektheitsüberprüfung wird ferner in Schritt 60 der Abrechnungsdatensatz 46 in der Abrechnungsdatenbank 44 angelegt. Dieser Abrechnungsdatensatz 46 gestattet es dem Client 16 im vorliegenden Ausführungsbeispiel, innerhalb einer Frist von 24 Stunden die Teilstücke X1, X2, X3, ..., XN herunterzuladen. Außerdem wird ein Einmalpasswort TR-PW zufällig erzeugt, welches der Client 16 für alle diese Transaktion betreffenden weiteren Vorgänge benötigt. Dieses Transaktionspasswort TR-PW wird in Schritt 62 an den Client 16 übertragen.

In den folgenden Schritten lädt der Client 16 die verschlüsselten Teilstücke X1, X2, X3, ..., XN nacheinander von dem durch die Serveradresse ADR bezeichneten Cache-Server 14, 14', 14", ... herunter. Dabei autentifiziert sich der Client 16 bei jedem Teilstück X1, X2, X3, ..., XN (oder in Ausführungsalternativen nur einmal oder einige wenige Male) durch sein Transaktionspasswort TR-PW. Schritt 64 betrifft die an den Cache-Server 14, 14', 14", ... mit der Serveradresse ADR gerichtete Anfrage nach dem ersten Teilstück X1. In Schritt 66 wird dieses Teilstück X1 an den Client 16 übertragen. Die Schritte 68 und 70 betreffen das Herunterladen des zweiten Teilstücks X2. Das Anfrage-Antwort-Wechselspiel wird fortgesetzt, bis alle Teilstücke X1, X2, X3, ..., XN im Dateisystem 20 des Client 16 abgelegt sind (in Fig. 3 durch drei Punkte angedeutet). Insgesamt erfolgt das Herunterladen jedes Teilstücks X1, X2, X3, ..., XN wie ein üblicher Dateidownload nach dem HTTP-Protokoll.

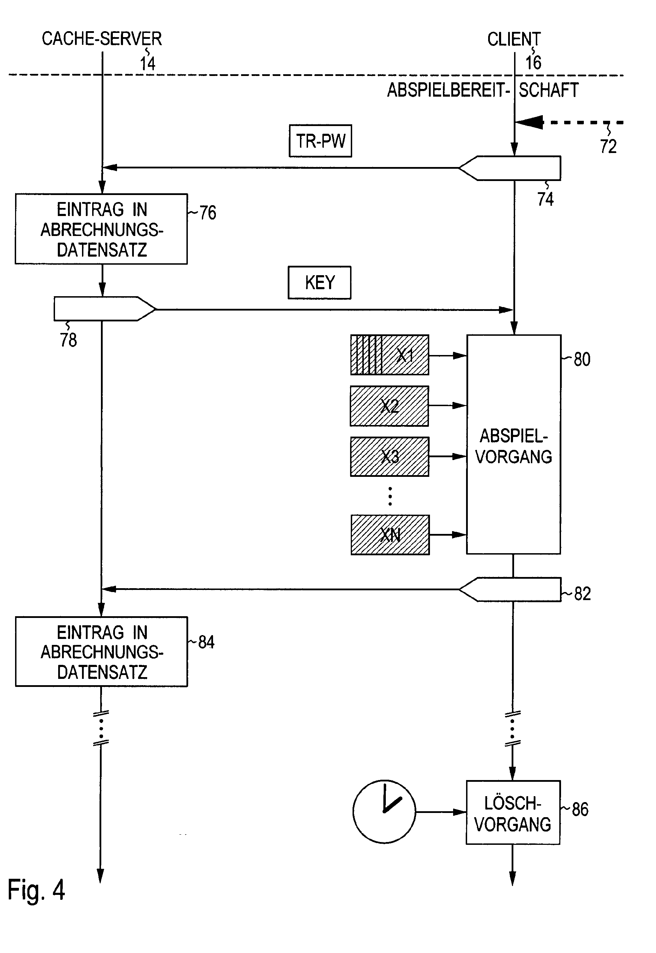

Nach dem vollständigen Herunterladen des ersten Teilstücks X1 ist der Client 16 abspielbereit (in Fig. 3 und Fig. 4 ist dieser Zeitpunkt durch eine gestrichelte Linie angegeben). In Ausführungsalternativen ist dagegen die Abspielbereitschaft erst nach dem Erhalt mehrerer Teilstücke (z.B. der ersten beiden Teilstücke X1 und X2) vorgesehen. Die in Zusammenhang mit dem Abspielvorgang ausgeführten Schritte sind in Fig. 4 veranschaulicht. Diese Schritte werden parallel zu dem Herunterladen der restlichen Teilstücke (in Fig. 3 unter der gestrichelten Linie gezeigt) ausgeführt, wenn der Abspielvorgang vom Benutzer unmittelbar nach Eintritt der Abspielbereitschaft gestartet wird. Der Download-Vorgang erfolgt dann im Hintergrund, so daß eine durchgängige Betrachtung der Mediadaten M sichergestellt ist.

Die Abspielbereitschaft wird dem Benutzer durch eine geeignete Anzeige auf dem Bildschirm 18 symbolisiert. In Reaktion auf eine Benutzereingabe 72 (beispielsweise einen Mausklick) wird zunächst durch eine Serveranfrage die Berechtigung des Clients 16 überprüft. Die Serveranfrage kann an den auch zum Herunterladen der Teilstücke X1, X2, X3, ..., XN verwendeten Cache-Server 14 oder an einen anderen Cache-Server 14', 14", ... oder an einen weiteren Verwaltungsrechner (in den Figuren nicht gezeigt) gerichtet sein.

Die Serveranfrage beginnt in Schritt 74 mit einer von dem Abspielprogramm 22 generierten HTTP-Anfrage, die dem Cache-Server 14 die Abspielanforderung signalisiert. Bei dieser Anfrage wird wiederum das eindeutige Transaktionspaßwort TR-PW verwendet, um Manipulationen zu verhindern. Hat der Cache-Server 14 ein gültiges Transaktionspaßwort TR-PW empfangen, trägt er zunächst in den Abrechnungsdatensatz 46 eine Notiz über den Start des Abspielens ein (Schritt 76) und übermittelt dann in Schritt 78 den bei der Verschlüsselung der Teilstücke X1, X2, X3, ..., XN eingesetzten Einmal-Schlüssel KEY an den Client 16, genauer gesagt, an den Filter 24 des Abspielprogramms 22.

Der Schlüssel KEY wird vom Filter 24 zur Entschlüsselung der Teilstücke X1, X2, X3, ..., XN benutzt. Der Filter 24 setzt ferner die entschlüsselten Teilstücke D1, D2, D3, ..., DN zu der abspielbaren Fassung M' der Mediadaten M zusammen und überträgt die Fassung M' an den Decoder 26, der seinerseits die vom Benutzer gewünschten Bild- und Toninformationen erzeugt. Dieser Abspielvorgang, der vom Filter 24 unter Verwendung der in der Partlist enthaltenen Informationen gesteuert wird, ist in Fig. 4 mit dem Bezugszeichen 80 gekennzeichnet. Während des Abspielens greift der Filter sukzessive auf die im Dateisystem 20 abgelegten, verschlüsselten Teilstücke X1, X2, X3, ..., XN zu. Die Entschlüsselung dieser Teilstücke erfolgt jedoch ausschließlich im Arbeitsspeicher, damit kein Sicherheitsloch entsteht. Die Übergänge zwischen den Teilstücken X1, X2, X3, ..., XN sind beim Abspielvorgang 80 für den Benutzer nicht sichtbar. Insgesamt unterscheidet sich das multimediale Abspielen der entschlüsselten und wieder zusammengesetzten Teilstücke X1, X2, X3, ..., XN nicht vom Abspielen des ursprünglichen Datenbestands.

Zum Schutz vor Raubkopien wird im hier beschriebenen Ausführungsbeispiel darauf geachtet, daß weder die entschlüsselten Teilstücke D1, D2, D3, ..., DN noch die zusammengesetzten Mediadaten M' komplett verfügbar sind. Lediglich die aktuell im Zugriff befindlichen Teilstücke X1, X2, X3, ..., XN werden bei Bedarf ("*on-the-fly"*) entschlüsselt und zusammengesetzt. Dies geschieht überdies lediglich im Arbeitsspeicher, welcher für den Zugriff durch andere Programme gesperrt ist. Auch der Schlüssel KEY wird lediglich im Arbeitsspeicher der aktuellen Instanz des Filters 24 gehalten und nicht im Dateisystem 20 oder auf einer Festplatte abgelegt. Eine unerlaubte Duplizierung der Mediadaten durch den Benutzer ist daher nicht möglich.

Ein besonderes Merkmal des hier beschriebenen Ausführungsbeispiels ist, daß die beschriebenen Vorgänge qualitätsneutral sind. Mit anderen Worten findet bei dem Zerteilen der Mediadaten M lediglich eine Reorganisation oder Umverteilung statt. Weder nimmt das Volumen zu, noch wird die Performance negativ beeinflusst. Ein weiterer Vorteil besteht darin, daß ein Abspielen nicht ohne den Filter 24 möglich ist, welcher auch die Entschlüsselung vornimmt. Die Datensicherheit wird also erstens durch die Verschlüsselung der Daten gewährleistet und zweitens dadurch, daß ein Abspielen ohne den Filter 24, welcher ohne Autentifikation nicht funktionstüchtig ist, nicht möglich ist.

Sobald der Abspielvorgang beendet ist, sendet der Client 16 in Schritt 82 eine entsprechende Nachricht an den Cache-Server 14, welcher dies in dem entsprechenden Abrechnungsdatensatz 46 festhält (Schritt 84). Für jeden weiteren Abspielvorgang muß sich der Client 16 nochmals bei dem Cache-Server 14 mit den in Fig. 4 gezeigten Schritten autentifizieren. Der Cache-Server 14 überprüft dann, ob der Film nochmals abgespielt werden darf, was je nach Ausleihdauer erlaubt oder untersagt ist.

Durch die Verschlüsselung ist sichergestellt, daß mit den im Dateisystem 20 des Client 16 vorliegenden Daten ohne erneute Autentifizierung bei einem der Cache-Server 14, 14' ,14", ... kein neuer Abspielvorgang gestartet werden kann. Es ist daher möglich, die verschlüsselten Teilstücke X1, X2, X3, ..., XN im lokalen Dateisystem 20 des Client 16 zu speichern. Wenn der Benutzer den Film nochmals ansehen möchte, ist daher kein weiterer Download-Vorgang mehr erforderlich.

Im hier beschriebenen Ausführungsbeispiel ist es jedoch vorgesehen, die verschlüsselten Teilstücke X1, X2, X3, ..., XN nicht unbeschränkt, sondern nur für einen vorbestimmten Zeitraum lokal im Client 16 zu speichern. Um dies zu ermöglichen, setzt das Löschmodul 28 mit Abschluß des in Fig. 3 gezeigten *Download*-Vorgangs für jedes Teilstück X1, X2, X3, ..., XN eine Lebenszeitvariable auf einen vorbestimmten Wert, beispielsweise 24 Stunden. Die Lebenszeitvariable läuft unabhängig von der Systemuhr des Client 16. Ist diese Lebenszeit auf 0 gesunken, veranlaßt das Löschmodul 28, daß das jeweilige Teilstück X1, X2, X3, ..., XN im Dateisystem 20 unwiderruflich gelöscht wird (Schritt 86 in Fig. 4).

Zur Verhinderung von Manipulationen sind im Abspielprogramm 22 Überwachungsmechanismen vorgesehen, die unerlaubte Modifikationen entdecken und unmittelbar an einen der Server 12, 14, 14', 14", ... übermitteln. Sobald ein Manipulationsversuch erkannt wird, wird überdies das komplette Abspielsystem im Client 16 so lange deaktiviert, bis es durch einen Techniker des Dienstanbieters (z.B. durch eine Neuinstallation) wieder reaktiviert wird.

## Patentansprüche

1. Verfahren zum Übertragen und Abspielen von Mediadaten (M), mit den von einem Client (16) zumindest teilweise parallel ausgeführten Schritten:
- sukzessives Herunterladen der in Teilstücke (X1, X2, X3, ... XN) unterteilten Mediadaten (M) auf den Client (16), und
- multimediales Abspielen (80) der heruntergeladenen Teilstücke (X1, X2, X3, ... XN) durch den Client (16), wobei das Abspielen frühestens beginnt, nachdem das erste Teilstück (X1, X2, X3, ... XN) vollständig heruntergeladen wurde, und wobei die Teilstücke (X1, X2, X3, ... XN) beim Abspielen (80) zusammenhängend wiedergegeben werden.

2. Verfahren nach Anspruch 1, bei dem die Teilstücke (X1, X2, X3, ... XN) in verschlüsselter Form vorliegen und erst beim Abspielen (80) entschlüsselt werden.

3. Verfahren nach Anspruch 2, bei dem vor der Entschlüsselung der Teilstücke (X1, X2, X3, ... XN) beim Abspielen (80) durch eine Serveranfrage (74) die Abspielberechtigung überprüft wird.

4. Verfahren nach Anspruch 2 oder Anspruch 3, bei dem die verschlüsselten Teilstücke (X1, X2, X3, ... XN) als Dateien in einem Dateisystem (20) des Client (16) gespeichert werden.

5. Verfahren nach Anspruch 4, bei dem die Teilstücke nach Ablauf eines vorbestimmten Zeitraums automatisch aus dem Dateisystem (20) des Client (16) gelöscht werden.

6. Verfahren nach einem der Ansprüche 1 bis 5, bei dem Verwaltungs- und Sonderinformationen, die sich am Ende der ursprünglichen Mediadaten (M) befinden, extrahiert und zumindest in der ersten Hälfte der Übertragung der Teilstücke (X1, X2, X3, ... XN) und vorzugsweise im ersten Teilstück (X1) oder in Zusammenhang mit der Übertragung des ersten Teilstücks (X1) übertragen werden.

7. Verfahren nach einem der Ansprüche 1 bis 6, bei dem eine Informationen über die einzelnen Teilstücke (X1, X2, X3, ... XN) enthaltende Partlist zumindest in der ersten Hälfte der Übertragung der Teilstücke (X1, X2, X3, ... XN) und vorzugsweise vor der Übertragung der Teilstücke (X1, X2, X3, ... XN) übertragen wird.

8. Client (16), der zur Durchführung eines Verfahrens nach einem der Ansprüche 1 bis 7 eingerichtet ist.

9. Verfahren zum Bereitstellen von Mediadaten (M), bei dem die Mediadaten (M) in verschlüsselte Teilstücke (X1, X2, X3, ... XN) umgewandelt und auf einem Server oder mehreren Servern (12, 14, 14', 14", ...) bereitgestellt werden, wobei der eine Server oder die mehreren Server (12, 14, 14', 14", ...) dazu eingerichtet ist/sind, die verschlüsselten Teilstücke (X1, X2, X3, ... XN) einem Client nach Anspruch 8 zur Verfügung zu stellen.

10. Server (12, 14, 14', 14", ...), der zur Durchführung eines Verfahrens nach Anspruch 9 eingerichtet ist.
